Europäisches Patentamt

(19) European Patent Office

Office européen des brevets

(11) **EP 0 872 714 B1**

(12) **EUROPÄISCHE PATENTSCHRIFT**

(45) Veröffentlichungstag und Bekanntmachung des Hinweises auf die Patenterteilung:
**17.08.2005 Patentblatt 2005/33**

(51) Int Cl.⁷: **G01D 5/244**

(21) Anmeldenummer: **98106294.6**

(22) Anmeldetag: **07.04.1998**

(54) **Positionsmesseinrichtung und Verfahren zu deren Betrieb**

Position measuring device as well as method for operating the same

Dispositif pour déterminer la position ainsi que la procédure de son opération

(84) Benannte Vertragsstaaten:
**AT CH DE FR GB IT LI**

(30) Priorität: **16.04.1997 DE 19715742**
**25.09.1997 DE 19742317**

(43) Veröffentlichungstag der Anmeldung:
**21.10.1998 Patentblatt 1998/43**

(73) Patentinhaber: **Dr. Johannes Heidenhain GmbH**
**83292 Traunreut (DE)**

(72) Erfinder:
• **Hagl, Rainer, Dr.**
**83352 Altenmarkt (DE)**

• **Hausschmid, Mathias, Dipl.-Ing. (FH)**
**83349 Palling (DE)**
• **Spanner, Erwin, Dipl.-Phys.**
**83278 Traunstein (DE)**
• **Streitwieser, Johann, Dipl.-Ing. (FH)**
**83355 Grabenstätt (DE)**
• **Thiel, Jürgen, Dr.**
**83278 Traunstein (DE)**

(56) Entgegenhaltungen:
**EP-A- 0 463 561       EP-A- 0 552 726**

• **PATENT ABSTRACTS OF JAPAN vol. 14, no. 309 (P-1071), 4.Juli 1990 & JP 02 099826 A (MATSUSHITA ELECTRIC IND CO), 11.April 1990,**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft eine Positionsmeßeinrichtung sowie ein Verfahren zum Betrieb einer Positionsmeßeinrichtung. Insbesondere lassen sich die erfindungsgemäßen Maßnahmen in Verbindung mit einer inkrementalen Positionsmeßeinrichtung vorteilhaft einsetzen.

Bekannte inkrementale Positionsmeßeinrichtungen ermöglichen neben der Übertragung von bereits digitalisierten bzw. rechteckförmigen Inkrementalsignalen auch die Übertragung von sinusförmigen, analogen Inkrementalsignalen an eine nachgeordnete Auswerteeinheit. Die analogen Inkrementalsignale können dabei auf unterschiedlichste Art und Weise erzeugt werden, beispielsweise über die optische, magnetische, induktive oder aber kapazitive Abtastung einer körperlich ausgebildeten Maßstabteilung. Daneben können die analogen, positionsabhängigen Inkrementalsignale auch über ein Interferometer generiert werden, wobei dann anstelle einer körperlichen Maßstabstruktur die Lichtwellenlänge bzw. entsprechende Bruchteile hiervon das Teilungsnormal bildet. Ebenso wäre grundsätzlich denkbar, Bruchteile anderer Wellenformen als Teilungsnormale zu verwenden, z.B. beim Einsatz von Mikrowellen, akust. Wellen etc..

Bei einer vorgesehenen Übertragung von analogen Inkrementalsignalen erfolgt erst auf Seiten der Auswerteeinheit eine Weiterverarbeitung der Signale, beispielsweise eine weitere Unterteilung in Form einer Interpolation. Die Übertragung der analogen Inkrementalsignale von der jeweiligen Positionsmeßeinrichtung an die Auswerteeinheit bietet einige Vorteile, wie etwa eine niedrige Übertragungsfrequenz bei gleichbleibenden Meßschritt sowie eine relativ hohe zulässige Verfahrgeschwindigkeit auch bei einem kleinen Meßschritt. Werden nunmehr Positionsmeßeinrichtungen mit einer hohen Auflösung und entsprechend kleiner Signalperiode eingesetzt, beispielsweise Laser-Interferometer oder aber interferentiell arbeitende optische Positionsmeßeinrichtungen, so können bei der Übertragung analoger Inkrementalsignale eine Reihe von Problemen resultieren. Liegen z.B. die Signalperioden derartiger Positionsmeßeinrichtungen im Bereich von etwa 0,5μm, so ergeben sich bereits bei relativ langsamen Verfahrgeschwindigkeiten von 1m/sec hohe Signalfrequenzen der analogen Inkrementalsignale in der Größenordnung von ca. 2MHz. Zur Verarbeitung derart hochfrequenter analoger Inkrementalsignale sind jedoch nicht alle Auswerteeinheiten in der Lage. Zudem ergeben sich Probleme bei der möglichst störungsfreien Übertragung der hochfrequenten Inkrementalsignale über größere Entfernungen. Im Fall von Störungen bei der Signalübertragung resultieren wiederum Fehler bei der Positionsbestimmung über die Auswerteeinheit; so werden insbesondere bei einer auf Seiten der Auswerteeinheit erfolgenden Signalinterpolation zur Auflösungssteigerung ideale, sinusförmige Inkrementalsignale der Positionsmeßeinrichtung vorausgesetzt.

Darüberhinaus werden bei verschiedenen Anwendungen mitunter geschwindigkeitsabhängig unterschiedliche Anforderungen an die Auflösung der von der Positionsmeßeinrichtung gelieferten analogen Inkrementalsignale gestellt. Während dabei im Fall hoher Verfahrgeschwindigkeiten in der Regel keine extreme Genauigkeit bei Positionsbestimmung erforderlich ist, resultieren bei kleineren Relativgeschwindigkeiten üblicherweise höhere Anforderungen an die zur Verfügung stehende Auflösung der analogen Inkrementalsignale der Positionsmeßeinrichtung.

Aus der EP 463 561 A1 und der EP 0 552 726 A2 sind jeweils gattungsgemäße Verfahren und Schaltungsanordnungen bekannt, die es gestatten, die über eine Positionsmesseinrichtung erzeugten analogen Inkrementalsignale in ihrer Signalperiode zu modifizieren. Da darüber eine Auflösungssteigerung erreicht werden soll, resultieren am Ausgang der entsprechenden Schaltungsanordnungen Inkrementalsignale mit einer kleineren Signalperiode bzw. größeren Signalfrequenz im Vergleich zu den eingangsseitigen Inkrementalsignalen.

Aus der JP 02-099826 ist eine ähnliche Lösung bekannt, wobei jedoch die vorgeschlagene Schaltungsanordnung ausgangsseitig Rechtecksignale mit einer höheren Frequenz liefert.

Aufgabe der vorliegenden Erfindung ist es, eine Positionsmeßeinrichtung sowie ein Verfahren zum Betrieb einer Positionsmeßeinrichtung zu schaffen, über die zum einen die angesprochenen Probleme bei der Verwendung hochauflösender Positionsmeßeinrichtungen mit kleinen Signalperioden vermieden werden können. Zum anderen sollen auch die geschwindigkeitsabhängig unterschiedlichen Anforderungen an die Auflösung der Positionsmeßeinrichtung erfüllbar sein. Darüberhinaus ist ein möglichst fehlerfreier Meßbetrieb auch über längere Meßstrecken bzw. längere Meßzeiten wünschenswert.

Diese Aufgabe wird gelöst durch eine Positionsmeßeinrichtung mit den Merkmalen des Anspruches 1 sowie durch ein Verfahren zum Betrieb einer Positionsmeßeinrichtung mit den Merkmalen des Anspruches 15.

Vorteilhafte Maßnahmen zur Ausgestaltung der erfindungsgemäßen Positionsmeßeinrichtung bzw. des erfindungsgemäßen Verfahrens ergeben sich aus den Maßnahmen in den jeweiligen abhängigen Ansprüchen.

Erfindungsgemäß wird nunmehr eine variable Signalperiode bzw. -frequenz der von der Positionsmeßeinrichtung an die nachgeordnete Auswerteeinheit übertragenen analogen Ausgangssignale bzw. Inkrementalsignale vorgesehen. Insbesondere ist es hierbei möglich, die ggf. zu hohe Signalfrequenz der analogen Inkrementalsignale im Fall hochauflösender Positionsmeßeinrichtungen oder im Fall hoher Relativgeschwindigkeiten zu reduzieren. Zu diesem Zweck ist erfindungsgemäß eine Signalperioden-Variationseinheit vorgesehen, die beispielsweise der Positionsmeßeinrichtung zugeordnet werden kann oder aber zwischen der Positionsmeßeinrichtung und der nachgeordneten Auswerteeinheit angeordnet ist. Selbstverständlich können neben den derart modifizierten Inkrementalsignalen mit veränderter Signalperiode respektive -frequenz auch die unveränderten analogen Inkrementalsignale zwischen der Positionsmeßeinrichtung und der nachgeordneten Auswerteeinheit übertragen werden.

Aufgrund der erfindungsgemäßen Maßnahmen ist somit gewährleistet, daß auch hochauflösende inkrementale Meßsysteme in Verbindung mit Auswerteeinheiten eingesetzt werden können, die grundsätzlich keine derart hohen Eingangsfrequenzen der analogen Inkrementalsignale zulassen. Ferner sind auch hohe Verfahrgeschwindigkeiten möglich, da die Signalperiode dann geeignet vergrößert werden kann, was in diesem Einsatzfall für eine Positionsbestimmung mit hinreichender Präzision ausreicht. Auf Seiten der Auswerteeinheit kann dann zur Auflösungssteigerung eine weitere elektronische Unterteilung bzw. Interpolation der übertragenen sinus- und/oder cosinusförmigen Inkrementalsignale in bekannter Art und Weise erfolgen.

Die Variation der Signalperiode der an die Auswerteeinheit übertragenen analogen Inkrementalsignale kann dabei sowohl automatisiert, beispielsweise in Abhängigkeit von der Geschwindigkeit, oder aber manuell durch den Anwender erfolgen, wenn beispielsweise die zugehörige Auswerteeinheit nur eine bestimmte maximale Eingangsfrequenz der analogen Inkrementalsignale verarbeiten kann.

Die erfindungsgemäßen Überlegungen lassen sich sowohl bei Positionsmeßeinrichtungen mit körperlich ausgebildeter Maßstabteilung einsetzen wie auch bei Positionsmeßeinrichtungen, die als Teilungsnormal z.B. die Lichtwellenlänge oder Bruchteile hiervon nutzen, d.h. bei Interferometern. Insbesondere im letztgenannten Fall ergeben sich auf Grundlage der vorliegenden Erfindung weitere vorteilhafte Ausgestaltungsmöglichkeiten. Diese bieten insbesondere Vorteile, wenn bei derartigen Positionsmeßeinrichtungen eine Konvertierung der Inkrementalsignal-Einheiten in bestimmte, vorzugebende - Einheiten gefordert ist und/oder diverse Umgebungseinflüsse zu kompensieren sind. Desweiteren gewährleisten die erfindungsgemäßen Maßnahmen auch einen fehlerfreien Betrieb einer derartigen Positionsmeßeinrichtung über längere Meßstrecken und/oder längere Meßzeiten.

Weitere Vorteile sowie Einzelheiten der erfindungsgemäßen Positionsmeßeinrichtung bzw. des erfindungsgemäßen Verfahrens ergeben sich aus der nachfolgenden Beschreibung von Ausführungsbeispielen anhand der beiliegenden Figuren.

Dabei zeigt

Figur 1 eine schematische Darstellung eines ersten Ausführungsbeispiels einer erfindungsgemäßen Positionsmeßeinrichtung inklusive nachgeordneter Auswerteeinheit;

Figur 2 eine Blockschaltbild-Darstellung einer ersten Ausführungsform einer geeigneten Signalperioden-Variationseinheit, wie sie etwa in der Positionsmeßeinrichtung gemäß Figur 1 einsetzbar ist;

Figur 3 eine Darstellung des Signalverlaufes im Ausführungsbeispiel der Positionsmeßeinrichtung der Figur 1 kurz vor bzw. kurz nach der Variation der Signalperiode der analogen Inkrementalsignale;

Figur 4 eine Blockschaltbild-Darstellung einer zweiten Ausführungsform einer Signalperioden-Variationseinheit, wie sie insbesondere in einer als Interferometer ausgebildeten Positionsmeßeinrichtung einsetzbar ist.

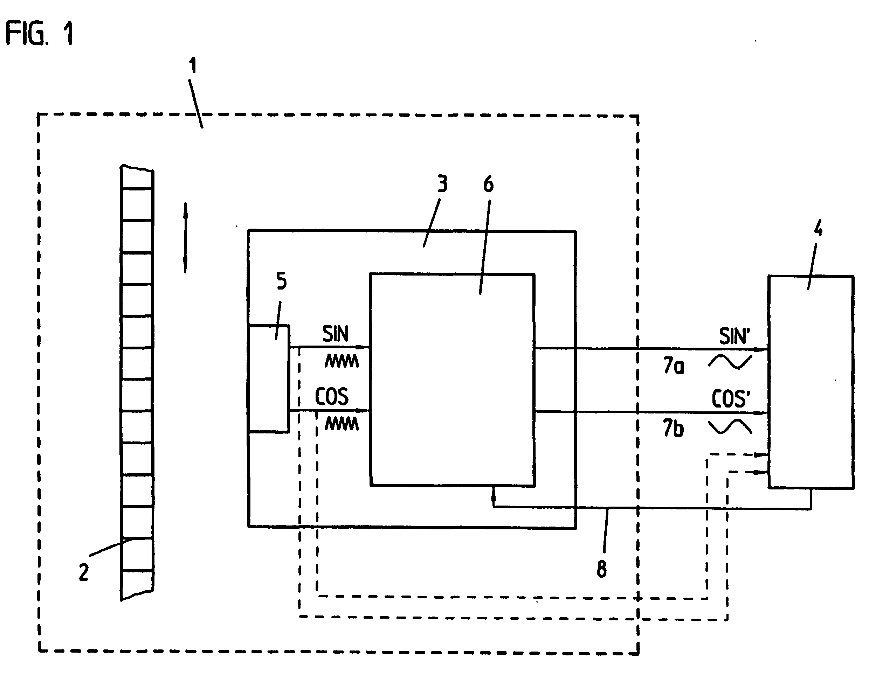

Das in Figur 1 dargestellte erste Ausführungsbeispiel einer erfindungsgemäßen Positionsmeßeinrichtung 1 umfaßt eine Maßstabteilung 2 sowie eine relativ dazu bewegliche Abtasteinheit 3. Die von der Positionsmeßeinrichtung 1 erzeugten, gegebenenfalls modifizierten analogen Inkrementalsignale SIN', COS' werden über Signalübertragungsleitungen 7a, 7b an eine nachgeordnete Auswerteeinheit 4 zur Weiterverarbeitung übertragen. Die Maßstabteilung 2 und die Abtasteinheit 3 sind etwa mit zueinander beweglichen Teilen einer Werkzeugmaschine verbunden, deren Relativposition zueinander hochexakt bestimmt werden soll. Als Auswerteeinheit 4 ist in diesem Fall eine übliche numerische Werkzeugmaschinensteuerung vorgesehen. Neben dem schematisiert dargestellten Ausführungsbeispiel zur Erfassung von linearen Relativbewegungen können selbstverständlich auch rotatorische Positionsmeßeinrichtungen erfindungsgemäß ausgestaltet werden.

Bei der Relativbewegung von Maßstabteilung 2 und Abtasteinheit 3 werden über eine Signalerzeugungseinheit 5 periodisch modulierte, analoge Inkrementalsignale SIN, COS erzeugt. Hierbei sind zumindest zwei, vorzugsweise um 90° phasenversetzte, periodisch modulierte Signale erforderlich, über die sowohl die Positionsinformation bezüglich der Relativlage von Maßstabteilung 2 und Abtasteinheit 3 als auch die entsprechende Richtungsinformation zur Verfügung steht. Grundsätzlich könnte auch ein anderer definierter Phasenversatz, beispielsweise 120°, vorgesehen sein. Die Erzeugung der analogen Inkrementalsignale SIN, COS über die schematisiert angedeutete Signalerzeugungseinheit 5 kann in vielfältigster Form erfolgen, das heißt es können hierzu in bekannter Art und Weise optische, magnetische, induktive oder aber kapazitive Abtastprinzipien eingesetzt werden, wenn z.B. wie in Figur 1 gezeigt eine geeignete Maßstabteilung 2 abgetastet wird. In Figur 1 sind deshalb auch keine weiteren Details bezüglich des eigentlichen Abtastprinzipes dargestellt, sondern lediglich die hierzu erforderliche Signalerzeugungseinheit 5 schematisch angedeutet.

Beispielsweise kann im Fall einer optischen Positionsmeßeinrichtung 1 eine reflektierend ausgebildete Maßstabteilung 2 mit der Abtasteinheit 3 abgetastet werden. Die zur Erzeugung der analogen Inkrementalsignale SIN, COS erforderliche Signalerzeugungseinheit 5 umfaßt dann ein oder mehrere Lichtquellen sowie optoelektronische Detektorelemente, über die die von der Maßstabteilung 2 reflektierten Strahlenbündel erfaßt werden.

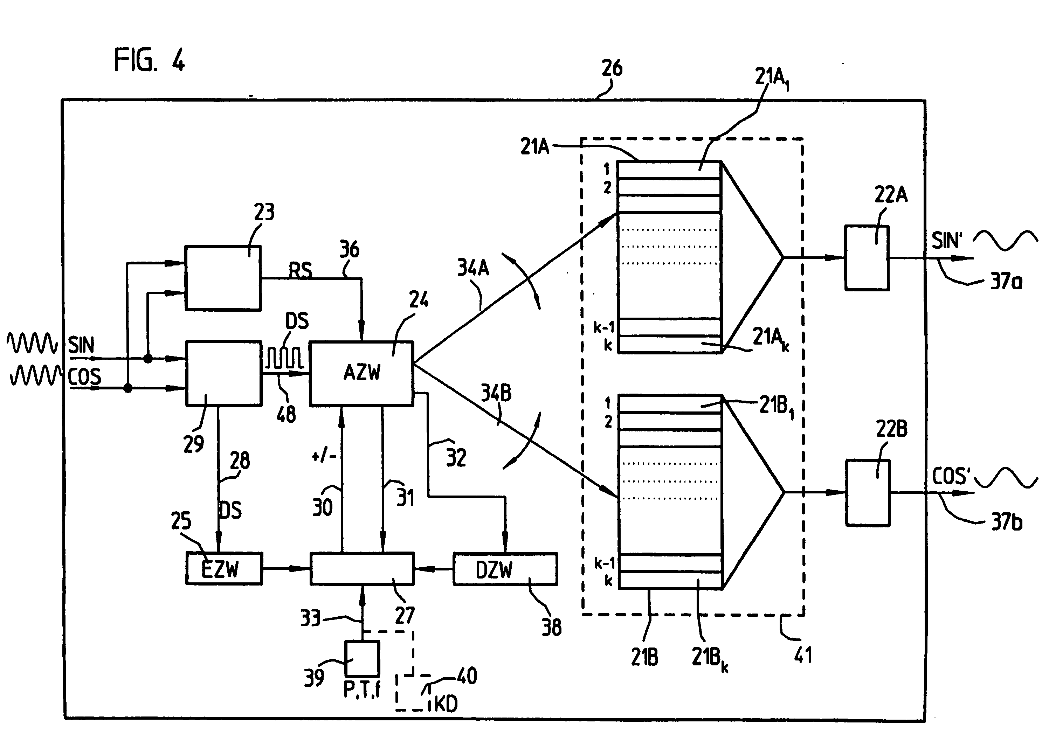

Desweiteren können die nachfolgend beschriebenen erfindungsgemäßen Maßnahmen grundsätzlich nicht nur in Positionsmeßeinrichtungen mit einer körperlich ausgebildeteten Maßstabteilung eingesetzt werden; es ist vielmehr ebenso möglich, eine als Interferometer ausgebildete Positionsmeßeinrichtung damit auszustatten, bei der das Teilungsnormal durch die verwendete Lichtwellenlänge vorgegeben wird. Eine in besonderer Weise geeignete Einheit zur Verarbeitung der analogen Inkrementalsignale auf Seiten einer Positionsmeßeinrichtung, die als Interferometer ausgebildet ist, wird anhand der Figur 4 noch detailliert beschrieben.

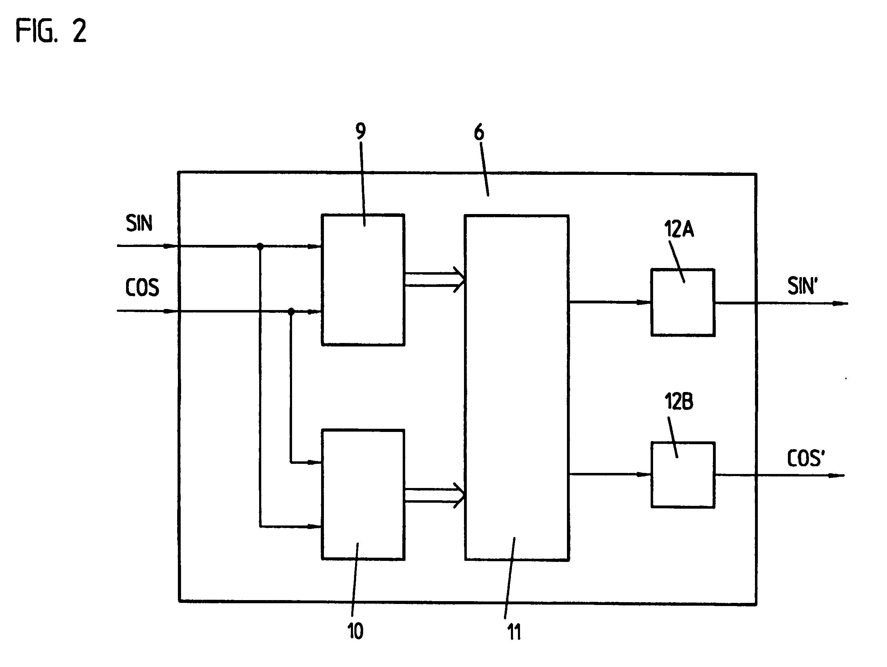

Die im dargestellten ersten Ausführungsbeispiel der Figur 1 über die Maßstab-Abtastung erzeugten analogen Inkrementalsignale SIN, COS werden einer Signalperioden-Variationseinheit 6 zugeführt, die in der gezeigten Ausführungsform in der Abtasteinheit 3 angeordnet ist. Über die Signalperioden-Variationseinheit 6 kann je nach gewünschter oder erforderlicher Signalperiode bzw. -frequenz die Signalperiode der analogen Abtastsignale SIN, COS definiert variiert werden. Details bezüglich einer möglichen Ausführungsform der Signalperioden-Variationseinheit 6 ergeben sich aus der nachfolgenden Beschreibung der Figur 2, in der eine erste Ausführungsform der Signalperioden-Variationseinheit 6 schematisiert dargestellt ist. Die von der Signalperioden-Variationseinheit 6 modifizierten analogen Inkrementalsignale SIN, COS werden anschließend über Signalübertragungsleitungen 7a, 7b als modifizierte analoge Inkrementalsignale SIN', COS' an die nachgeordnete Auswerteeinheit 4 zur Weiterverarbeitung übertragen. Hierbei weisen die modifizierten Inkrementalsignale SIN', COS' in der Regel eine größere Signalperiode bzw. eine geringere Signalfrequenz als die ursprünglich auf Seiten der Positionsmeßeinrichtung 1 generierten analogen Inkrementalsignale SIN, COS auf.

Dargestellt ist in Figur 1 desweiteren noch eine Steuerleitung 8, die die Auswerteeinheit 4 mit der Positionsmeßeinrichtung 1, insbesondere mit der Signalperioden-Variationseinheit 6 verbindet. Über ein oder mehrere Steuerleitungen 8 kann seitens der Auswerteeinheit 4 eine gewünschte oder erforderliche Veränderung der Signalperiode mittels eines definierten Steuersignales angefordert werden. Als Steuerleitung 8 kann dabei sowohl eine separate, zusätzliche Verbindungsleitung vorgesehen werden; ebenso ist jedoch auch die Nutzung bereits vorhandener Verbindungsleitungen zwischen der Positionsmeßeinrichtung 1 und der Auswerteeinheit 4 zu diesem Zweck möglich. Im letztgenannnten Fall könnte beispielsweise ein entsprechendes Steuersignal auf die Versorgungsleitung oder eine andere geeignete Verbindungsleitung aufmoduliert werden.

In Figur 1 ist in strichlinierter Form zudem eine unmittelbare Verbindung zwischen der Signalerzeugungseinheit 5 und der Auswerteeinheit 4 angedeutet. Damit soll veranschaulicht werden, daß selbstverständlich auch die Übertragung der unveränderten Inkrementalsignale SIN, COS von der Positionsmeßeinrichtung 1 an die Auswerteeinheit 4 möglich ist, ohne daß demzufolge eine Veränderung der Signalperiode über die Signalperioden-Variationseinheit 6 erfolgt. Die Übertragung der unveränderten Inkrementalsignale SIN, COS kann dabei entweder wie in Figur 1 angedeutet über separate Signalübertragungsleitungen erfolgen oder aber über die beiden Signalübertragungsleitungen 7a, 7b. Im letztgenannten Fall passieren die analogen Inkrementalsignale SIN, COS demzufolge die Signalperioden-Variationseinheit 6, ohne jedoch in Signalperiode- oder frequenz verändert zu werden.

Eine Veränderung der Signalperiode der analogen Inkrementalsignale SIN, COS, die an die Auswerteeinheit 4 übertragen werden, kann aus verschiedensten Gründen erforderlich sein. Beispielsweise liefert die hochauflösende Positionsmeßeinrichtung 1 analoge Inkrementalsignale SIN, COS mit einer relativ kleinen Signalperiode, so daß auf Seiten der Auswerteeinheit 4 eingangsseitig hohe Frequenzen der anliegenden Inkrementalsignale resultieren und von dieser nicht weiterverarbeitet werden können. In einem derartigen Fall ist eine Vergrößerung der Signalperiode bzw. eine Verringerung der Signalfrequenz erforderlich.

Daneben können auch bei hohen Verfahrgeschwindigkeiten zwischen Maßstabteilung 1 und Abtasteinheit 3 zu kleine Signalperioden bzw. zu hohe Signalfrequenzen der übertragenen analogen Inkrementalsignale resultieren und eine Vergrößerung der Signalperiode bzw. eine Verringerung der Signalfrequenz erforderlich machen. Werden später ggf. wieder geringere Verfahrgeschwindigkeiten erreicht, so kann selbstverständlich wieder auf die kleinere Signalperiode der analogen Inkrementalsignale SIN, COS umgeschaltet werden und es steht erneut eine höhere Auflösung bei der Positionsbestimmung zur Verfügung.

Vorzugsweise erfolgt im Fall einer erforderlichen Vergrößerung der Signalperiode eine Multiplikation der jeweiligen Signalperiode mit mindestens einem Signalperioden-Variationsfaktor n. Beispielsweise können auch mehrere derartige -Faktoren n = 2, 4, 8, 16 vorgegeben werden, mit denen die Signalperiode der analogen Inkrementalsignale SIN, COS vergrößert wird, wenn dies aus den oben aufgeführten Gründen nötig ist.

Neben einem ganzzahligen Signalperioden-Variationsfaktor n kann erfindungsgemäß z.B. im Fall eines Interferometers selbstverständlich auch ein entsprechender nicht-ganzzahliger -Variationsfaktor n gewählt werden.

Die erforderliche Variation der Signalperiode der analogen Inkrementalsignale SIN, COS kann zum einen über die bereits erwähnte Übertragung eines entsprechenden Steuersignals auf einer Steuerleitung 8 von der Auswerteeinheit 4 an die Positionsmeßeinrichtung 1 erfolgen. Daneben kann jedoch alternativ auch vorgesehen werden, eine bestimmte gewünschte Signalperiode manuell vom Anwender beispielsweise über ein geeignetes - nicht dargestelltes - Schaltelement auf Seiten der Positionsmeßeinrichtung 1 einzustellen.

Im Fall der vorgesehenen Variation der Signalperiode über ein von der Auswerteeinheit 4 übertragenes Steuersignal ist es desweiteren möglich, eine geschwindigkeitsabhängige Variation der Signalperiode automatisiert vorzunehmen. Wird dabei etwa eine bestimmte Verfahrgeschwindigkeit überschritten, so kann durch die entsprechende Übertragung eines Steuersignales im Meßbetrieb auf die Ausgabe von analogen Inkrementalsignalen SIN', COS' mit geeignet vergrößerter Signalperiode umgeschaltet werden. Entsprechend wird beim Wieder-Unterschreiten dieser Verfahrgeschwindigkeit die Signalperiode der analogen Inkrementalsignale wieder verringert.

Eine derartige geschwindigkeitsabhängige Variation der Signalperiode der übertragenen analogen Inkrementalsignale SIN, COS kann dabei selbstverständlich auch in Verbindung mit mehr als zwei verfügbaren, unterschiedlichen Signalperioden realisiert werden. So können etwa für mehrere Geschwindigkeitsbereiche geeignete Signalperioden bzw. Multiplikationsfaktoren n für die analogen Inkrementalsignale SIN, COS vorgesehen werden, zwischen denen dann jeweils geschwindigkeitsabhängig umgeschaltet wird usw..

Die zu einer automatisierten Variation der Signalperioden der übertragenen, analogen Inkrementalsignale SIN, COS erforderliche Geschwindigkeitsdetektion kann auf mehrere Arten erfolgen. Beispielsweise kann hierzu ein separater Geschwindigkeitsdetektor vorgesehen werden. Ebenso ist es möglich, lediglich die Frequenz der analogen Inkrementalsignale SIN, COS zu erfassen, um auf diese Art und Weise eine Information bezüglich der aktuellen Verfahrgeschwindigkeit zur Verfügung zu haben. Die entsprechende Geschwindigkeitsinformation wird von der jeweiligen Auswerteeinheit 4 genutzt, um bei bestimmten Geschwindigkeiten eine Veränderung der Signalperiode der analogen Inkrementalsignale SIN, COS anzufordern.

Eine erste, mögliche Ausführungsform der Signalperioden-Variationseinheit 6 wird nachfolgend anhand der Darstellung in Figur 2 näher erläutert. Hierbei ist die gezeigte Ausführungsform insbesondere in Verbindung mit der Positionsmeßeinrichtung gemäß Figur 1 einsetzbar. Die von der Signalerzeugungseinheit 5 generierten analogen Inkrementalsignale SIN, COS werden der Signalperioden-Variationseinheit 6 zugeführt und gelangen eingangsseitig auf eine erste und zweite Interpolatoreinheit 9, 10. Während die erste Interpolatoreinheit 9 in bekannter Art und Weise eine Vielfachunterteilung der analogen Inkrementalsignale SIN, COS vornimmt, beispielsweise um den Faktor 100, erfolgt in der zweiten Interpolatoreinheit 10 ein Zählen der jeweiligen Signal-Nulldurchgänge. Ausgangsseitig liefern die beiden Interpolatoreinheiten 9, 10 jeweils ein Digitalwort, welches an einen nachgeordneten Speicherbaustein 11 übergeben wird bzw. zur Addressierung desselben dient. Der Speicherbaustein 11 enthält wiederum eine Reihe von Umrechnungstabellen für verschiedene Variationsfaktoren n der Signalperioden der analogen Inkrementalsignale SIN, COS. Pro Variationsfaktor n steht demzufolge eine entsprechende Umrechnungstabelle zur Verfügung. Je nach gewünschter Vergrößerung der Signalperiode wird über die Umrechnungstabelle jedem Positionswert der beiden Signale, der sich aus den beiden übergebenen Digitalwörtern ergibt, ein bestimmter veränderter Positionswert zugeordnet, so daß jeweils ein Signalverlauf mit vergrößerter Signalperiode resultiert. Ausgangsseitig liefert der Speicherbaustein 11 nach einer derartigen Signalverarbeitung Ansteuersignale für nachgeordnete D/A-Wandler, die quasi-analoge sinus- und cosinusförmige Inkrementalsignale SIN', COS' erzeugen. Diese modifizierten Inkrementalsignale SIN', COS' werden dann an die Auswerteeinheit übergeben.

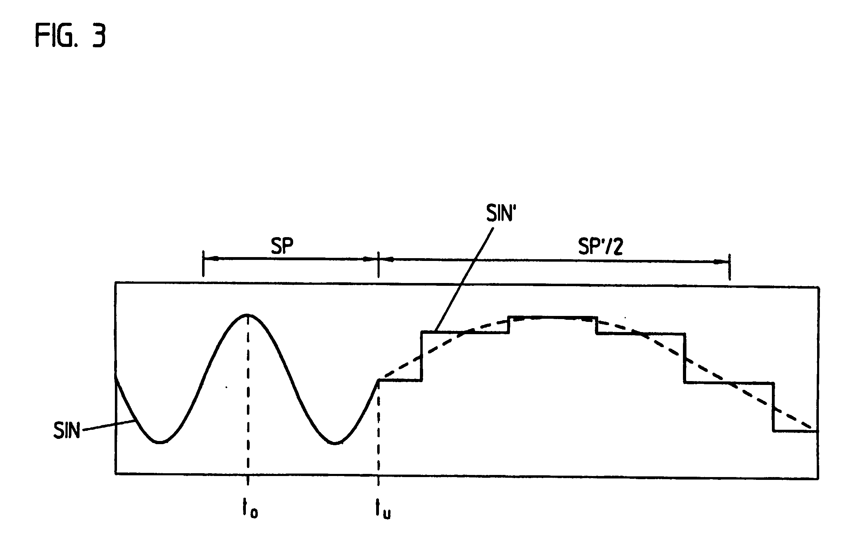

Eine Darstellung der Signalform zumindest eines analogen Inkrementalsignales SIN kurz vor bzw. kurz nach der Variation der Signalperiode SP ist in Figur 3 dargestellt. In der linken Hälfte von Figur 3 ist hierbei das von der Signalerzeugungseinheit 5 gelieferte analoge Inkrementalsignal SIN erkennbar, dessen Signalperiode SP verändert werden soll. Zum Zeitpunkt $t_0$ erfolgt dabei beispielsweise durch die oben erläuterte Übertragung eines Steuersignales von der Auswerteeinheit die Anforderung, die Signalperiode SP zu vergrößern. Nach einer weiteren Signalperiode SP des analogen Inkrementalsignales SIN wird dann zum Umschaltzeitpunkt $t_U$ über die Signalperioden-Variationseinheit die Signalperiode SP variiert, d.h. im dargestellten Fall ist eine Vergrößerung der Signalperiode SP um den Faktor n = 4 vorgesehen. Ab dem Umschaltzeitpunkt $t_U$ wird dann das in Signalperiode SP' und -frequenz modifizierte Inkrementalsignal SIN' an die Auswerteeinheit übertragen. Der Umschaltzeitpunkt $t_U$ ist hierbei derart definiert gewählt, daß bei einem Nulldurchgang des analogen Inkrementalsignales SIN die Umschaltung auf eine andere Signalperiode SP' erfolgt. In Figur 3 ist in stark übertriebener Form die Quantisierung des modifizierten Inkrementalsignales SIN' dargestellt; strichpunktiert ist die ideale sinusförmige Form des Inkrementalsignales SIN' eingezeichnet. Das quantisierte Inkrementalsignal SIN' entspricht dabei umso besser dem idealen, sinusförmigen Inkrementalsignal, je höher die Auflösung der D/A-Wandlereinheiten in der Signalperioden-Variationseinheit gewählt wird.

Eine zweite Ausführungsform einer geeigneten Signalperioden-Variationseinheit 26 ist in Figur 4 in einer schematisierten Darstellung gezeigt. Insbesondere eignet sich diese Variante in Verbindung mit einer als Interferometer ausgebildeten Positionsmeßeinrichtung. Selbstverständlich können dabei die am ersten Ausführungsbeispiel erläuterten Maßnahmen auch in Verbindung mit dem nachfolgenden Ausführungsbeispiel realisiert werden.

Neben alternativen Möglichkeiten zur Variation der Signalperiode bzw. der definierten Vorgabe der Signalperiode der an eine Auswerteeinheit übertragenen, analogen Inkrementalsignale seien am zweiten Ausführungsbeispiel nachfolgend auch verschiedenste Korrekturmittel beschrieben, die zur Eliminierung von unterschiedlichen Fehlern dienen, die bei der Positionsbestimmung auftreten können.

Das von einer bekannten - nicht dargestellten - Interferometer-Anordnung erzeugte Paar phasenversetzter Inkrementalsignale SIN, COS wird wiederum der Signalperioden-Variationseinheit 26 zugeführt. Diese übernimmt wie im vorhergehenden Beispiel u.a. die gewünschte Variation der Signalperiode und liefert ausgangsseitig die entsprechend modifizierten analogen Inkrementalsignale SIN', COS', welche über die Signalübertragungsleitungen 37a, 37b an eine - nicht gezeigte - Auswerteeinheit zur Weiterverarbeitung übertragen werden. Dort kann beispielsweise eine elektronische Signalinterpolation erfolgen etc..

Die von der Positionsmeßeinrichtung bzw. vom Interferometer gelieferten Inkrementalsignale SIN, COS werden in der Signalperioden-Variationseinheit 26 einer Interpolatoreinheit 29 sowie einer Richtungserkennungseinheit 23 zugeführt. Über die Interpolatoreinheit 29 erfolgt hierbei eine elektronische weitere Unterteilung der Eingangssignale SIN, COS in bekannter Art und Weise, d.h. die Interpolatoreinheit 29 liefert ausgangsseitig interpolierte Digitalsignale DS bzw. Rechteckimpulse mit einer höheren Frequenz als die Eingangssignale SIN, COS. Mit Hilfe der Richtungserkennungseinheit 23 wird auf Grundlage der beiden um 90° phasenversetzten Inkrementalsignale SIN, COS ein Richtungssignal RS bezüglich der Bewegungsrichtung der beiden zueinander beweglichen Teile erzeugt, deren Relativposition bestimmt werden soll.

Die interpolierten Digitalsignale DS wie auch das Richtungssignal RS werden über die Datenleitungen 36 und 48 einer Adreßzählereinheit 24 zugeführt. Je nach Bewegungsrichtung bzw. empfangenem Richtungssignal RS erfolgt in der Adreßzählereinheit 24 eine Veränderung des Adreßzählerwertes AZW. Im Fall einer Vorwärtsbewegung wird bei jedem Rechteckimpuls der Adreßzählerwert AZW beispielsweise um einen Wert hochgesetzt bzw. weitergezählt; im Fall der Rückwärtsbewegung erfolgt bei jedem Rechteckimpuls ein Heruntersetzen des Adreßzählerwertes AZW bzw. ein Zurückzählen. Wenn kein Rechteckimpuls bzw. Digitalsignal DS von der Interpolatoreinheit 29 anliegt bleibt der Adreßzählerwert AZW unverändert.

Der Adreßzählereinheit 24 nachgeordnet ist ein Speicherbaustein 41 vorgesehen, der im dargestellten Ausführungsbeispiel zwei Umrechnungstabellen 21 A, 21 B in Form einer Sinus- bzw. Cosinustabelle enthält. Die Umrechnungstabellen 21 A, 21 B bestehen aus jeweils k adressierten Tabellenbereichen $21A_1$ - $21A_k$, $21B_1$ - $21B_k$, wobei in den jeweils k Tabellenbereichen $21A_1$ - $21A_k$, $21B_1$ - $21B_k$ in digitaler Form die Signalamplitudenwerte mindestens einer Periode einer Sinus- bzw. Cosinus-Funktion abgelegt sind. Die einzelnen k Tabellenbereiche $21A_1$ - $21A_k$, $21B_1$ - $21B_k$ können über Adreßzeiger 34A, 34B von der Adreßzählereinheit 24 angesteuert werden. Die Signalamplitudenwerte der derart angesteuerten Tabellenbereiche $21A_1$ - $21A_k$, $21B_1$ - $21B_k$ werden anschließend jeweils an D/A-Wandlereinheiten 22A, 22B übermittelt, die hieraus wiederum die analogen Inkrementalsignale SIN', COS' erzeugen, welche an die Auswerteeinheit übertragen werden. Den D/A-Wandlereinheiten 22A, 22B kann desweiteren jeweils eine geeignete - nicht dargestellte - Filterelektronik nachgeordnet werden, die die resultierenden analogen Inkrementalsignale SIN', COS' vor der Übertragung an die Auswerteeinheit geeignet glättet.

Im dargestellten Ausführungsbeispiel ist ein Ausgang der Adreßzählereinheit 24 vorgesehen, über den zwei Adreßzeiger 34A, 34B angesprochen werden, die jeweils wiederum eine Umrechnungstabelle 21A, 21B ansteuern.

Daneben sind jedoch auch alternative Ausführungsvarianten im Rahmen der vorliegenden Erfindung realisierbar. So könnte in einer zweiten Ausführungsform die Adreßzählereinheit ausgangsseitig lediglich einen einzigen Adreßzeiger aufweisen, der wiederum lediglich eine einzige Umrechnungstabelle ansteuert. Die Tabellenbereiche der in diesem Fall zu wählenden, kombinierten Umrechnungstabelle besitzen dabei die doppelte Speicherbreite im Vergleich zum ersten Ausführungsbeispiel, so daß dort jeweils in kombinierter Form die digitalen Signalamplitudenwerte der Sinus- und Cosinus-Funktion abgelegt werden können.

In einer dritten Ausführungsform schließlich könnte vorgesehen werden, daß zwei Adreßzeiger der Adreßzählereinheit auf eine einzige Umrechnungstabelle zeigen, in der z.B. lediglich die digitalen Signalamplitudenwerte einer Sinus-Funktion abgelegt sind. Zwischen den beiden Adreßzeigern ist jedoch ein Phasenversatz von 90° vorgegeben, so daß auf diese Art und Weise die phasenversetzten Signalamplitudenwerte einer Sinus- und einer Cosinus-funktion für die Ausgangssignale an die nachgeordneten D/A-Wandler übergeben werden können.

Die ausgangsseitig variablen Signalperioden SP' der analogen Inkrementalsignale SIN', COS' werden im gezeigten Ausführungsbeispiel auf die nachfolgend erläuterte Art und Weise erzeugt. Hierbei ist eine Variation der Eingangs-Signalperioden SP um lediglich ganzzahlige Signalperioden-Variationsfaktoren n möglich ist, d.h. SP' = n * SP . So können etwa im Beispiel ausgangsseitig Signalperioden SP' der analogen Inkrementalsignale SIN', COS' von 1µm, 2µm, 4µm und 10µm erzeugt werden; die ausgangsseitig verfügbaren Signalperioden SP' stehen demzufolge jeweils in einem ganzzahligen Verhältnis zueinander. Eingangsseitig ist im Fall der Verwendung eines He-Ne-Lasers mit der Emissionswellenlänge $\lambda \cong 633nm$ im Interferometer eine Signalperiode SP der Signale SIN, COS von $\lambda/2 = 633/2nm$ vorgegeben. In den beiden Umrechnungstabellen 21A, 21 B werden in diesem Beispiel dann die digitalen Signalamplitudenwerte einer Sinus- bzw. Cosinus-Funktion mit einer Signalperiode abgelegt, die das kleinste gemeinsame Vielfache der Ausgangs-Signalperioden SP' darstellt, d.h. Sinus- und Cosinus-Funktionen mit einer Signalperiode von 20µm.

Je nach ausgangsseitig erforderlicher Signalperiode werden die Adreßzeiger 34A, 34B bei jedem Rechteckimpuls von der Interpolatoreinheit 29 mit unterschiedlichen Ansteuer-Schrittweiten inkrementiert, d.h. unterschiedliche Tabellenbereiche $21A_1$ - $21A_k$, $21B_1$ - $21B_k$ der Umrechnungstabellen 21A, 21B angesprochen. Werden dann z.B. ausgangsseitig analoge Inkrementalsignale SIN', COS' mit der Signalperiode 10µm gewünscht, so beträgt die Ansteuer-Schrittweite bei jedem Rechteckimpuls 2 Tabellenschritte, d.h. nach dem Tabellenbereich $21A_1$ wird anschließend vom Adreßzeiger der Tabellenbereich $21A_3$ angesteuert usw.. Im Fall einer erforderlichen Signalperiode von 4µm beträgt die Ansteuer-Schrittweite für die Adreßzeiger 34A, 34B 5 Tabellenschritte etc.. Jedem Signalperioden-Variationsfaktor n ist demzufolge eine bestimmte Ansteuer-Schrittweite der Adreßzeiger 34A, 34B zugeordnet.

In den Umrechnungstabellen 21 A, 21 B werden bei einer derartigen Ausführungsform der Signalperioden-Variationseinheit 26 demzufolge die digitalen Signalamplitudenwerte von Sinus- und/oder Cosinus-Funktionen abgelegt, die der größten ausgangsseitig gewünschten Signalperiode SP' der analogen Inkrementalsignale SIN', COS' entspricht oder aber in einem ganzzahligen Verhältnis zu allen gewünschten Signalperioden SP' der analogen Inkrementalsignale SIN', COS' steht.

Alternativ zu einer derartigen Realisierung der variablen Signalperiode der analogen Inkrementalsignale kann ähnlich dem vorhergehend beschriebenen Ausführungsbeispiel der Figur 2 vorgesehen werden, im entsprechenden Speicherbaustein der Signalperioden-Variationseinheit für jede gewünschte Auflösung bzw. für jede erforderliche ausgangsseitige Signalperiode eine separate Umrechnungstabelle für die Sinus- und/oder Cosinus-Funktion abzulegen. Selbstverständlich können die beiden erwähnten Möglichkeiten auch geeignet miteinander kombiniert werden. Beispielsweise ist dabei etwa denkbar, bestimmte ganzzahlige Signalperioden-Verhältnisse über die anhand von Figur 4 erläuterte Variante zu realisieren, während andere Signalperioden der analogen Inkrementalsignale auf der Basis separater Umrechnungstabellen wie vorab erläutert realisiert werden usw..

Wie bereits oben angedeutet, enthält die Signalperioden-Variationseinheit 26 dieses Ausführungsbeispieles desweiteren verschiedene Korrekturmittel, um Fehler bei der Positionsbestimmung bzw. Signalperioden-Variation zu eliminieren bzw. zu minimieren. Als Korrekturmittel seien dabei eine Eingangszählereinheit 25, eine Durchlaufzählereinheit 38 sowie eine Prozessoreinheit 27 bezeichnet, deren Arbeitsweise innerhalb der Signalperioden-Variationseinheit 26 nachfolgend erläutert wird.

Die Ausgangssignale der bereits oben erwähnten Interpolatoreinheit 29 in Form von Digitalsignalen DS bzw. Rechteckimpulsen werden über die Datenleitung 28 auch der Eingangszählereinheit 25 zugeführt, d.h. der aktuelle Eingangszählerwert EZW stellt die Anzahl bislang übermittelter Rechteckimpulse der Interpolatoreinheit 29 dar. Durch Multiplikation des Eingangszählerwertes EZW mit der vorgegebenen Signalperiode SP, d.h. dem entsprechenden Bruchteil der Wellenlänge des Interferometers in Luft $\lambda_{Luft}$, bei einer Vierfach-Auswertung ohne weitere Interpolation üblicherweise $\lambda_{Luft}/8$, ergibt sich somit der aktuelle Sollpositions-Meßwert SPM bei der laufenden Positionsbestimmung:

$$SPM = EZW * \lambda_{Luft}/8 \qquad (Gl. 1)$$

$\lambda_{Luft}/8$ stellt dabei die Signalperiode SP der Eingangssignale SIN, COS dar. Eine derartige Ermittlung des Sollpositions-Meßwertes SPM in Form der erwähnten Multiplikation erfolgt über die der Eingangszählereinheit 25 nachgeordnete Prozessoreinheit 27. Die Prozessor einheit 27 kann dabei selbstverständlich auch alternativ zu einem Prozessor ausgebildet werden, beispielsweise als geeignete Digital-Logik etc..

Der ebenfalls bereits oben erwähnten Adreßzählereinheit ist eine Durchlaufzählereinheit 38 nachgeordnet. Der bestimmte Durchlaufzählerwert DZW stellt damit die Anzahl der bislang erfolgten Durchläufe der Adreßzeiger 34A, 34B durch die Umrechnungstabellen 21A, 21B dar bzw. den Anteil ganzer Signalperioden am aktuellen Istpositions-Meßwert IPM. In Verbindung mit dem gerade aktuellen Adreßzählerwert AZW, der über die Datenleitung 31 an die Prozessoreinheit 27 übergeben wird, läßt sich in der Prozessoreinheit 27 daraus der aktuelle Istpositions-Meßwert IPM bestimmen:

$$IPM = (DZW + AZW/k) * SP' \qquad (Gl. 2)$$

Nach einer derartigen Ermittlung von Soll- und Ist-Positions-Meßwert SPM, IPM erfolgt anschließend über die Prozessoreinheit 27 ein Vergleich der beiden Meßwerte SPM und IPM. Wird eine Abweichung zwischen den beiden Meßwerten SPM und IPM festgestellt, so wird anschließend von der Prozessoreinheit 27 über die Datenleitung 30 die Adreßzählereinheit 24 derart angesteuert, daß der Adreßzählerwert AZW korrigierend erhöht oder verringert wird. Als Folge des geeignet erhöhten oder aber verringerten Adreßzählerwertes AZW werden von den Adreßzeigern 34A, 34B wiederum andere Tabellenbereiche 21 A, - 21 $A_k$, 21$B_1$ - 21$B_k$ der Umrechnungstabellen 21 A, 21 B angesteuert und damit korrigierte analoge Inkrementalsignale SIN', COS' generiert.

Auf diese Art und Weise lassen sich Abweichungen zwischen den Ist- und Sollpositionsmeßwerten IPM, SPM und damit Fehler in der Positionsmessung eliminieren oder zumindest minimieren. Die derart korrigierbaren Fehler können hierbei verschiedene Ursachen haben.

Eine erste Fehlerquelle liegt im nicht-ganzzahligen Verhältnis der eingesetzten Laser-Wellenlänge λ, d.h. dem verwendeten Teilungsnormal, zu den üblichen Einheiten, wie etwa der vorgegegebenen Signalperiode SP' der analogen Inkrementalsignale SIN', COS', die z.B. in metrischer Form vorgegeben sind. So ergibt sich bei jedem Durchlauf einer Umrechnungstabelle 21A, 21B und dem Erzeugen der gewünschten Ausgangssignalperiode SP' ein Fehler im ermittelten Istpositions-Meßwert IPM, der u.a. von der Anzahl k der vorgesehenen Tabellenbereiche 21$A_1$ - 21$A_k$, 21 B, - 21 $B_k$ abhängt. Mit mehrmaligem Durchlaufen der Umrechnungstabellen 21 A, 21 B resultiert ein kumulativer Fehler, so daß letztlich mit zunehmender Meßdauer und/oder Meßstrecke die Positionsbestimmung immer ungenauer würde.

Aufgrund der vorab erläuterten Maßnahmen ist über die Korrekturmittel und den ständigen Vergleich von Soll- und Istpositions-Meßwert SPM, IPM jedoch gewährleistet, daß im Fall eines Fehlers, der größer als die kleinste Ansteuer-Schrittweite der Tabellenbereiche 21$A_1$ - 21$A_k$, 21$B_1$ - 21$B_k$ ist, eine Korrektur des Adreßzählerwertes AZW erfolgt. Diese Korrektur durch Hinauf- oder Herabsetzen des Adreßzählerwertes AZW erfolgt dabei solange, bis die ermittelte Abweichung zwischen den Werten SPM und IPM kleiner als die kleinste Ansteuer-Schrittweite ist. Eine nochmalige Verbesserung ergibt sich, wenn eine derartige Korrektur des Adreßzählerwertes AZW bereits bei einer Abweichung von Soll- und Istpositionsmeßwert SPM, IPM erfolgt, die größer als die halbe minimale Ansteuer-Schrittweite ist. Damit läßt sich erreichen, daß der maximale Fehler in der Positionsmessung in der Größenordnung der halben Ansteuer-Schrittweite liegt.

Eine weitere Steigerung der Meßgenauigkeit bzw. weitere Fehlerminimierung um den Faktor j läßt sich erreichen, wenn in den Umrechnungstabellen 21A, 21B ein ganzzahliges Vielfaches j der benötigten Signalamplitudenwerte abgelegt wird, d.h. j Signalperioden der entsprechenden Sinus- oder Cosinus-Funktion. Im Grenzfall könnten dabei eine derartige Anzahl j an Signalperioden abgelegt werden, daß diese der kompletten Meßlänge entsprechen. Die Ursache für die Fehlerminimierung liegt bei einem derartigen Vorgehen darin, daß im Fall mehrerer abgelegter Signalperioden der nichtganzzahlige Rest aus dem Verhältnis zwischen den Signalperioden und der Wellenlänge kleiner ist als z.B. im Fall lediglich einer einzigen Signalperiode. Insgesamt resultiert dabei ein um den Faktor j kleinerer kumulativer Fehler.

Eine zweite Fehlerquelle liegt in den während der Messung schwankenden Umgebungsbedingungen wie etwa Luftdruck p, Temperatur T und Feuchte f. Zu den schwankenden Umgebungsbedingungen zählt desweiteren die jeweilige Gas-Zusammenstzung im Meßraum.

Mit den Parametern p, T, f und ggf. auch der Gas-Zusammensetzung ändert sich auch die Wellenlänge $\lambda_{Luft}$ der im Interferometer eingesetzten Strahlungsquelle, d. h. die Signalperiode SP der Inkrementalsignale SIN, COS. Unverändert bleibt jedoch die ausgangsseitige Signalperiode SP' der analogen Inkrementalsignale SIN', COS'. Damit wiederum ist ohne Korrektur nicht gewährleistet, daß die gewünschte Beziehung SP' = n * SP zwischen den ein- und ausgangsseitigen Signalperioden SP und SP' gilt.

Aus diesem Grund ist bei der in Figur 4 gezeigten Ausführungsform der Signalperioden-Variationseinheit 26 vorgesehen, in die Ermittlung des Sollpositions-Meßwertes SPM über die Prozessoreinheit 27 auch die Umgebungsparameter miteinzubeziehen, d.h. SPM = f (p,T,f). Hierbei gehen die Umgebungsparameter p, T, f und ggf. auch die Gas-Zusammensetzung in die bei der Bestimmung von SPM gemäß Gl. (1) herangezogene Wellenlänge $\lambda_{Luft}$ ein. Über geeignete Erfassungsmittel 39 werden deshalb sensormäßig laufend die Umgebungsparameter wie Luft-Temperatur, -Feuchte und -Druck sowie evtl. auch die Gas-Zusammensetzung detektiert, über die Datenleitung 33 der Prozessoreinheit 27 zugeführt und bei der Bestimmung des Sollpositions-Meßwertes SPM berücksichtigt. Hierzu wird in der Prozessoreinheit 27 laufend die Wellenlänge $\lambda_{Luft}$ über die bekannte Edlen-Formel aktualisiert und bei der Bestimmung von SPM berücksichtigt. Über die beschriebene Korrektur in Form des Herauf- oder Herabsetzen des Adreßzählerwertes AZW im Fall der Abweichung von Soll- und Istpositions-Meßwert SPM, IPM werden auch die Umgebungseinflüsse auf die Positionsgenauigkeit minimiert. Ausgangsseitig weisen die analogen Inkrementalsignale SIN', COS' dann maximal einen Fehler auf, der in der Größenordnung der Auflösung eines Tabellenbereiches 21$A_1$ - 21$A_k$, 21$B_1$ - 21$B_k$ bzw. eines halben Tabellenbereiches liegt, je nach gewählter Korrektur-Schrittweite.

Alternativ zur erwähnten Erfassung der Umgebungs-Parameter könnte auch vorgesehen werden, den Brechungsindex der Luft im Meßraum über eine Brechungsindex-Bestimmungseinheit, z.B. über ein Refraktometer direkt zu ermitteln und der Prozessoreinheit 27 zur Weiterverarbeitung zuzuführen. Die Prozessoreinheit 27 zieht die Ausgangssignale des Refraktometer zusätzlich zur Bestimmung des aktuellen Sollpositions-Meßwertes heran.

In Figur 4 ist desweiteren ein Datenspeicher 40 schematisiert angedeutet, in dem meßanordnungsspezifische Kompensationsdaten KD abgelegt sind. Hierbei handelt es sich im Fall einer Werkzeugmaschine beispielsweise um maschinenspezifische Korrekturdaten bezüglich Spindelsteigungsfehlern, Führungsfehlern, thermischen Fehlern etc., die während der Positionsbestimmung ähnlich den Umgebungs-Parametern p, T, f ebenfalls der Prozessoreinheit 27 zugeführt werden. Von der Prozessoreinheit 27 werden diese Daten KD ebenfalls in die laufende Bestimmung des Sollpositions-Meßwertes SPM einbezogen und über die beschriebene Korrektur bei der Ausgabe der analogen Inkrementalsignale berücksichtigt, d.h. SPM = f(KD). Grundsätzlich kann über die erfindungsgemäße Signalperioden-Variationseinheit 26 dabei auch ein Signalperioden-Umrechnungsfaktor n=1 gewählt werden, so daß über die damit mögliche Korrektur lediglich bestimmte Fehler bei der Positionsbestimmung eliminiert bzw. minimiert werden, die Ein- und Ausgangs-Signalperiode SP, SP' jedoch unverändert bleibt.

Desweiteren besteht die Möglichkeit etwa im Fall einer Positionsmeßeinrichtung mit körperlich ausgebildeter Maßstabteilung eventuell vorhandene Teilungsfehler vorab zu ermitteln und geeignete Korrekturdaten diesbezüglich in einem Speicher abzulegen. Von der Prozessoreinheit können auch diese meßsystemspezifischen Korrekturdaten im Verlauf der Messung berücksichtigt werden.

Neben den dargestellten Ausführungsbeispielen existieren selbstverständlich weitere Möglichkeiten, die erfindungsgemäße Positionsmeßeinrichtung auszugestalten.

## Patentansprüche

1. Positionsmeßeinrichtung zur Bestimmung der Relativposition zweier zueinander beweglicher Objekte, welche im Fall der Relativbewegung mindestens ein Paar phasenversetzter, analoger Inkrementalsignale (SIN, COS) liefert und über eine Signalperioden-Variationseinheit (6; 26) eine definierte Variation der Signalperioden (SP) der an eine nachgeordnete Auswerteeinheit (4) übertragenen analogen Inkrementalsignale (SIN', COS') möglich ist, **dadurch gekennzeichnet, dass**

   - über die Signalperioden-Variationseinheit (6; 26) eine Variation der übertragenen Signalperioden (SP') um einen Signalperioden-Variationsfaktor n ≥ 1 möglich ist und
   - die Signalperioden-Variationseinheit (6; 26) einen Speicherbaustein (11; 41) mit mindestens einer Umrechnungstabelle (21 A, 21B) umfasst und über die Umrechnungstabelle (21A, 21 B) nachgeordnete D/A-Wandler (12A, 12B; 22A, 22B) ansprechbar sind, welche die an die Auswerteeinheit (4) übertragenen analogen Inkrementalsignale (SIN', COS') mit variierter Signalperiode (SP') erzeugen.

2. Positionsmeßeinrichtung nach Anspruch 1, **dadurch gekennzeichnet, dass** die Signalperioden-Variationseinheit (6; 26) mit einer Steuerleitung (8) verbunden ist, über die die Übertragung eines Steuersignales zur Variation des Signalperiode (SP) der analogen Inkrementalsignale (SIN, COS) an die Signalperioden-Variationseinheit (6; 26) möglich ist.

3. Positionsmeßeinrichtung nach Anspruch 1, **dadurch gekennzeichnet, dass** auch die unveränderten Inkrementalsignale (SIN, COS) mit der ursprünglichen Signalperiode (SP) an die nachgeordnete Auswerteeinheit (4) übertragbar sind.

4. Positionsmeßeinrichtung nach Anspruch 1, **dadurch gekennzeichnet, dass** die Signalperioden-Variationseinheit (6,26) mindestens eine erste Interpolatoreinheit (9) umfasst, die dem Speicherbaustein (11; 41) vorgeordnet ist.

5. Positionsmeßeinrichtung nach Anspruch 4, **dadurch gekennzeichnet, dass** die erste Interpolatoreinheit (9) zur hochauflösenden Unterteilung der analogen Inkrementalsignale (SIN, COS) dient und desweiteren eine zweite Interpolatoreinheit (10) in der Signalperioden-Variationseinheit (6) angeordnet ist, über die die Signal-Nulldurchgänge der analogen Inkrementalsignale (SIN, COS) erfaßbar sind.

6. Positionsmeßeinrichtung nach Anspruch 1, **dadurch gekennzeichnet, dass** die Signalperioden-Variationseinheit (26) ferner Korrekturmittel (25, 27, 38) zur Eliminierung von Fehlern umfaßt, die bei der Signalperiodenvariation resultieren.

7. Positionsmeßeinrichtung nach Anspruch 1, **dadurch gekennzeichnet, dass** die Umrechnungstabelle (21A, 21B) mehrere adressierte und ansteuerbare Tabellenbereiche ($21A_1$ - $21A_k$, $21B_1$ -$21B_k$) aufweist, denen jeweils definierte Signalamplitudenwerte der an die Auswerteeinheit zu übertragenden Inkrementalsignale (SIN', COS') zugeordnet sind.

8. Positionsmeßeinrichtung nach Anspruch 7, **dadurch gekennzeichnet, dass** der Speicherbaustein (41) pro vorgesehenem Signalperioden-Variationsfaktor (n) mindestens eine Umrechnungstabelle (21A, 21B) umfaßt.

9. Positionsmeßeinrichtung nach Anspruch 7, **dadurch gekennzeichnet, dass** die Signalperioden-Variationseinheit (6,26) eingangsseitig eine Interpolatoreinheit (29) zur Erzeugung von interpolierten Digitalsignalen sowie eine Richtungserkennungseinheit (23) umfaßt, denen jeweils die von einer Signalerzeugungseinheit (5) gelieferten Inkrementalsignale (SIN, COS) zuführbar sind und desweiteren den Ausgängen der Interpolatoreinheit (29) und der Richtungserkennungseinheit (23) eine Adreßzählereinheit (24) nachgeordnet ist, über die ausgangsseitig die adressierten Tabellenbereiche ($21A_1$ - $21A_k$, $21B_1$ - $21B_k$) der mindestens einen Umrechnungstabelle (21A, 21B) im Speicherbaustein (41) ansteuerbar sind.

10. Positionsmeßeinrichtung nach Anspruch 9, **dadurch gekennzeichnet, dass** zur Variation der Signalperiode (SP') die Adreßzählereinheit (24) je nach auszugebender Signalperiode (SP') die Umrechnungstabelle (21A, 21B) in einer zugehörigen Ansteuer-Schrittweite ansteuert.

11. Positionsmeßeinrichtung nach Anspruch 9, **dadurch gekennzeichnet, dass** die Signalperioden-Variationseinheit (6,26) als Korrekturmittel (25, 27, 38) eine Eingangszählereinheit (25), eine Durchlaufzählereinheit (38) sowie eine Prozessoreinheit (27) umfaßt, wobei

    - der Eingangszählereinheit (25) die Ausgangssignale der Interpolatoreinheit (29) zuführbar sind, woraus ein aktueller Sollpositions-Meßwert (SPM) ermittelbar ist,
    - die Durchlaufzählereinheit (38) die Anzahl der erfolgten Durchläufe durch die mindestens eine Umrechnungstabelle (21A, 21B) bestimmt und
    - die Prozessoreinheit (27) derart ausgebildet ist, daß sie laufend über die Ausgangssignale der Eingangszählereinheit (25) den aktuellen Sollpositions-Meßwert bestimmt und mit einem aktuellen Istpositions-Meßwert (IPM) vergleicht, der sich aus einem aktuellen Stand der Adreßzählereinheit (24) und einem aktuellen Stand der Durchlaufzählereinheit (38) ergibt und im Fall einer Abweichung von Soll- und Istpositions-Meßwert (SPM, IPM) den Adreßzählerwert (AZW) der Adreßzählereinheit (24) definiert verändert.

12. Positionsmeßeinrichtung nach Anspruch 11, **dadurch gekennzeichnet, dass** die Korrekturmittel (25,27,38) desweiteren Erfassungsmittel (39) zur laufenden sensormäßigen Bestimmung von Parametern (p, T, f) bezüglich der Meßumgebung umfassen und die Parameter (p, T, f) der Prozessoreinheit (27) zuführbar sind, die diese zusätzlich zur Bestimmung des aktuellen Istpositions-Meßwertes (IPM) heranzieht.

13. Positionsmeßeinrichtung nach Anspruch 11, **dadurch gekennzeichnet, dass** die Korrekturmittel (25,27,38) desweiteren einen Datenspeicher (40) umfassen, in dem meßanordnungs-spezifische Kompensationsdaten (KD) abgelegt sind, die der Prozessoreinheit (27) zuführbar sind, die diese Kompensationsdaten (KD) zusätzlich zur Bestimmung des aktuellen Sollpositions-Meßwertes (SPM) heranzieht.

14. Positionsmeßeinrichtung nach Anspruch 11, **dadurch gekennzeichnet, dass** die Korrekturmittel (25,27,28) desweiteren eine Brechungsindexbestimmungseinheit umfassen, deren Ausgangssignale der Prozessoreinheit zuführbar sind, die diese Signale zusätzlich zur Bestimmung des aktuellen Sollpositions-Meßwertes heranzieht.

15. Verfahren zum Betrieb einer Positionsmeßeinrichtung zur Bestimmung der Relativposition zweier zueinander beweglicher Objekte, die im Fall der Relativbewegung mindestens ein Paar phasenversetzter, analoger Inkrementalsignale (SIN, COS) liefert, wobei über eine Signalperioden-Variationseinheit (6; 26) die Signalperioden (SP') der an eine nachgeordnete Auswerteeinheit (4) übertragenen analogen Inkrementalsignale (SIN', COS') um mindestens einen Signalperioden-Variationsfaktor n definiert variiert werden können **dadurch gekennzeichnet, dass**

    - über die Signalperioden-Variationseinheit (6; 26) die Signalperioden (SP') um einen Signalperiodenvariationsfaktor $n \geq 1$ variiert werden und
    - zur Signalperiodevariation die Signalperioden-Variationseinheit (6; 26) einen Speicherbaustein (11; 41) mit mindestens einer Umrechnungstabelle (21A, 21B) umfasst und über die Umrechnungstabelle (21A, 21B) nachgeordnete D/A-Wandler (12A, 12B; 22A, 22B) angesprochen werden, welche die an die Auswerteeinheit (4) übertragenen analogen Inkrementalsignale (SIN', COS') mit variierter Signalperiode (SP') erzeugen.

16. Verfahren nach Anspruch 15, **dadurch gekennzeichnet, dass** die mindestens zwei unterschiedlichen Signalperioden (SP, SP') in einem ganzzahligen Verhältnis zueinander stehen.

17. Verfahren nach Anspruch 15, **dadurch gekennzeichnet, dass** die Signalperioden (SP, SP') in Abhängigkeit von der Relativgeschwindigkeit der beiden zueinander beweglichen Objekte variiert werden.

**18.** Verfahren nach Anspruch 17, **dadurch gekennzeichnet, dass** im Fall höherer Relativgeschwindigkeiten eine größere Signalperiode (SP') über die Signalperioden-Variationseinheit (6) eingestellt wird als im Fall geringerer Relativgeschwindigkeiten.

**19.** Verfahren nach Anspruch 15, **dadurch gekennzeichnet, dass** zur Variation der Signalperiode (SP) über eine Steuerleitung (8) zwischen der Signalperioden-Variationseinheit (6,26) und einer nachgeordneten Auswerteeinheit (4) ein Steuersignal zur definierten Umstellung der gerade aktuellen Signalperiode (SP) auf eine andere Signalperiode (SP') von der Auswerteeinheit (4) zur Signalperioden-Variationseinheit (6) übertragen wird.

**20.** Verfahren nach Anspruch 15, **dadurch gekennzeichnet, dass** die Variation der Signalperiode (SP) der analogen Inkrementalsignale (SIN, COS) zu einem definierten Umschaltzeitpunkt ($t_U$) vorgenommen wird, an dem ein Nulldurchgang eines der Inkrementalsignale (SIN, COS) vorliegt.

**21.** Verfahren nach Anspruch 15, **dadurch gekennzeichnet, dass** die analogen Inkrementalsignale (SIN, COS) über ein oder mehrere Interpolatoreinheiten (9, 10) unterteilt und ein oder mehrere Digitalwörter gebildet werden, die den zugehörigen Positionswerten entsprechen, die Digitalwörter zur Adressierung eines Speicherbausteines (11) genutzt werden, der mindestens eine Umrechnungstabelle für mindestens einen Signalperiode-Variationsfaktor enthält und über den ein Signal mit veränderter Signalperiode gebildet wird und über den Speicherbaustein (11) ausgangsseitig Ansteuersignale für ein oder mehrere D/A-Wandlereinheiten (12A, 12B) erzeugt werden, so daß am Ausgang der Signalperioden-Variationseinheit analoge Inkrementalsignale (SIN', COS') mit veränderter Signalperiode (SP') zur Verfügung stehen.

**22.** Verfahren nach Anspruch 15, **dadurch gekennzeichnet, dass** desweiteren über Korrekturmittel (25, 27, 38), die der Signalperioden-Variationseinheit (6,26) zugeordnet sind, resultierende Fehler bei der Signalperiodenvariation eliminiert werden.

**23.** Verfahren nach Anspruch 15, **dadurch gekennzeichnet, dass** der Speicherbaustein (41) mehrere adressierte Tabellenbereiche ($21A_1$ - $21A_k$, $21B_1$ - $21B_k$) aufweist, denen jeweils definierte Signalamplitudenwerte der an die Auswerteeinheit zu übertragenden Inkrementalsignale (SIN', COS') zugeordnet sind.

**24.** Verfahren nach Anspruch 23, **dadurch gekennzeichnet, dass** das Paar der von der Positionsmeßeinrichtung gelieferten phasenversetzten Inkrementalsignale (SIN, COS) jeweils einer Interpolatoreinheit (29) sowie einer Richtungserkennungseinheit (23) zugeführt wird, deren Ausgängen eine Adreßzählereinheit (24) nachgeordnet ist und über die Adreßzählereinheit (24) ausgangsseitig die adressierten Tabellenbereiche ($21A_1$ - $21A_k$, $21B_1$ -$21B_k$) der mindestens einen Umrechnungstabelle (21A, 21B) im Speicherbaustein (41) angesteuert werden.

**25.** Verfahren nach Anspruch 24, **dadurch gekennzeichnet, dass** zur Variation der Signalperiode (SP') über die Adreßzählereinheit (24) die mindestens eine Umrechnungstabelle (21A, 21B) in vorgegebenen Ansteuer-Schrittweiten angesteuert wird, wobei jedem Signalperioden-Variationsfaktor (n) eine bestimmte Ansteuer-Schrittweite zugeordnet ist.

**26.** Verfahren nach Anspruch 24, **dadurch gekennzeichnet, dass** die den angesteuerten Tabellenbereichen ($21A_1$ - $21A_k$, $21B_1$ - $21B_k$) zugeordneten Signalamplitudenwerte an die D/A-Wandlereinheiten (22A, 22B) übermittelt werden, die daraus die zur Übertragung an die nachgeordnete Auswerteeinheit vorgesehenen Inkrementalsignale (SIN', COS') erzeugen.

**27.** Verfahren nach Anspruch 22, **dadurch gekennzeichnet, dass** zur Korrektur der bei der Messung resultierenden Fehler in der Positionsbestimmung

- einer Eingangszählereinheit (25) Ausgangssignale der Interpolatoreinheit (29) zugeführt werden, die zur Ermittlung eines aktuellen Sollpositions-Meßwertes (SPM) herangezogen werden,
- die Anzahl der erfolgten Durchläufe durch die mindestens eine Umrechnungstabelle (21A, 21B) über eine Durchlaufzählereinheit (38) bestimmt wird,
- über eine Prozessoreinheit (27) laufend ein aktueller Sollpositions-Meßwert (SPM) aus den Ausgangssignalen der Eingangszählereinheit (25) bestimmt und mit einem aktuellen Istpositions-Meßwert (IPM) verglichen wird, der sich aus einem aktuellen Stand der Adreßzählereinheit (24) und einem aktuellen Stand der Durchlaufzählereinheit (38) ergibt, und im Fall einer festgestellten Abweichung von Soll- und Istpositions-Meßwert (SPM, IPM) der Adreßzählerwert (AZW) der Adreßzählereinheit (24) über die Prozessoreinheit (27) definiert verändert wird.

**28.** Verfahren nach Anspruch 22, **dadurch gekennzeichnet, dass** zur Korrektur der bei der Messung resultierenden Fehler in der Positionsbestimmung desweiteren laufend Parameter (p, T, f) bezüglich der Meßumgebung erfaßt werden, die der Prozessoreinheit (27) zugeführt und von dieser zusätzlich zur Bestimmung des aktuellen Istpositions-Meßwertes (IPM) herangezogen werden.

29. Verfahren nach Anspruch 22, wobei zur Korrektur der bei der Messung resultierenden Fehler in der Positionsbestimmung desweiteren der Prozessoreinheit (27) meßanordnungs-spezifische Kompensationsdaten (KD) zugeführt und von dieser zusätzlich zur Bestimmung des aktuellen Sollpositions-Meßwertes (SPM) herangezogen werden.

**Claims**

1. Position measuring device for determination of the relative position of two objects movable towards one another, which in the case of relative movement supplies at least a pair of phase-shifted analog incremental signals (SIN, COS) and a defined variation of the signal periods (SP) of the analog incremental signals (SIN', COS') transmitted to an evaluation unit (4) downline is possible via a signal period variation unit (6: 26),
   **characterised in that**

   - a variation of the transmitted signal periods (SP') by a signal period variation factor of $n \geq 1$ is possible via the signal period variation unit (6; 26) and
   - the signal period variation unit (6; 26) comprises a memory module (11; 41) with at least one conversion table (21A, 21B) and downline D/A converters (12A, 12B; 22A, 22B), which generate the analog incremental signals (SIN', COS') transmitted to the evaluation unit (4) with varied signal period (SP'), can be detected via the conversion table (21A, 21B).

2. Position measuring device according to Claim 1, **characterised in that** the signal period variation unit (6; 26) is connected to a control line (8), via which the transmission of a control signal for variation of the signal period (SP) of the analog incremental signals (SIN, COS) to the signal period variation unit (6; 26) is possible.

3. Position measuring device according to Claim 1, **characterised in that** the unchanged incremental signals (SIN, COS) with the original signal period (SP) can also be transmitted to the evaluation unit (4) downline.

4. Position measuring device according to Claim 1, **characterised in that** the signal period variation unit (6; 26) comprises at least a first interpolator unit (9), which is connected upline of the memory module (11; 41).

5. Position measuring device according to Claim 4, **characterised in that** the first interpolator unit (9) serves for high resolution division of the analog incremental signals (SIN, COS) and in addition a second interpolator unit (10) is arranged in the signal period variation unit (6), via which the zero crossings of the analog incremental signals (SIN, COS) can be detected.

6. Position measuring device according to Claim 1, **characterised in that** the signal period variation unit (26) additionally comprises correcting elements (25, 27, 28) for the elimination of errors, which result during the signal period variation.

7. Position measuring device according to Claim 1, **characterised in that** the conversion table (21A, 21B) has several addressed and selectable table regions ($21A_1$-$21A_k$, $21B_1$-$21B_k$), to which defined signal amplitude values of the incremental signals (SIN', COS') to be transmitted to the evaluation unit are respectively assigned.

8. Position measuring device according to Claim 7, **characterised in that** the memory module (41) comprises at least one conversion table (21A, 21B) for each provided signal period variation factor (n).

9. Position measuring device according to Claim 7, **characterised in that** on the input side the signal period variation unit (6, 26) comprises an interpolator unit (29) for the generation of interpolated digital signals and also a direction recognition unit (23), to which the incremental signals (SIN, COS) supplied by a signal generation unit (5) are respectively fed, and in addition downline of the outputs of the interpolator unit (29) and the direction recognition unit (23) an address counter unit (24) is arranged, via which on the output side the addressed table regions ($21A_1$-$21A_k$, $21B_1$-$21B_k$) of the at least one conversion table (21A, 21B) are selectable in the memory module (41).

10. Position measuring device according to Claim 9, **characterised in that** for variation of the signal period (SP') the address counter unit (24) selects the conversion table (21A, 21B) in an associated selection increment depending on the signal period (SP') to be output.

11. Position measuring device according to Claim 9, **characterised in that** the signal period variation unit (6, 26) comprises an input counter unit (25), a cycle counter unit (38) and also a processor unit (27) as correction elements (25, 27, 38), wherein

- the output signals of the interpolator unit (29) can be fed to the input counter unit (25), and from these a current nominal position measured value (NPM) can be determined,
- the cycle counter unit (38) determines the number of cycles performed through the at least one conversion table (21A, 21B), and
- the processor unit (27) is configured such that it constantly determines the current nominal position measured value via the output signals of the input counter unit (25) and compares these with a current actual position measured value (APM), which results from a current status of the address counter unit (24) and a current status of the cycle counter unit (38), and in the case of a deviation of the nominal and actual position measured value (NPM, APM) specifically varies the address counter value (ACV) of the address counter unit (24).

12. Position measuring device according to Claim 11, **characterised in that** the correcting elements (25, 27, 38) additionally comprise detection means (39) for the constant sensor-based determination of parameters (p, T, f) with respect to the measurement environment and the parameters (p, T, f) can be fed to the processor unit (27), which additionally employs these to determine the current actual position measured value (APM).

13. Position measuring device according to Claim 11, **characterised in that** the correcting elements (25, 27, 38) additionally comprise a data memory (40), in which compensation data (CD) specific to the measurement arrangement are filed, which can be fed to the processor unit (27), which additionally employs these compensation data (CD) to determine the current nominal position measured value (NPM).

14. Position measuring device according to Claim 11, **characterised in that** the correcting elements (25, 27, 38) additionally comprise a refractive index determination unit, the output signals of which can be fed to the processor unit, which additionally employs these signals to determine the current nominal position measured value.

15. Method for operating a position measuring device for determination of the relative position of two objects movable towards one another, which in the case of relative movement supplies at least a pair of phase-shifted analog incremental signals (SIN, COS), wherein the signal periods (SP') of the analog incremental signals (SIN', COS') transmitted to an evaluation unit (4) downline can be specifically varied by at least one signal period variation factor n via a signal period variation unit (6: 26), **characterised in that**

- the signal periods (SP') can be varied by a signal period variation factor of $n \geq 1$ via the signal period variation unit (6; 26) and
- for the variation of the signal periods the signal period variation unit (6; 26) comprises a memory module (11; 41) with at least one conversion table (21A, 21B) and downline D/A converters (12A, 12B; 22A, 22B), which generate the analog incremental signals (SIN', COS') transmitted to the evaluation unit (4) with varied signal period (SP'), are detected via the conversion table (21A, 21B).

16. Method according to Claim 15, **characterised in that** the at least two different signal periods (SP, SP') are at an integer ratio to one another.

17. Method according to Claim 15, **characterised in that** the signal periods (SP, SP') are varied as a function of the relative velocity of the two objects movable towards one another.

18. Method according to Claim 17, **characterised in that** a larger signal period (SP') is set via the signal period variation unit (6) in the case of higher relative velocities than in the case of lower relative velocities.

19. Method according to Claim 15, **characterised in that** for variation of the signal period (SP) via a control line (8) between the signal period variation unit (6, 26) and an evaluation unit (4) connected downline, a control signal for specific conversion of the precisely current signal period (SP) is transmitted to another signal period (SP') by the evaluation unit (4) to the signal period variation unit (6).

20. Method according to Claim 15, **characterised in that** the variation of the signal period (SP) of the analog incremental signals (SIN, COS) is performed at a defined switchover time ($t_u$), at which a zero crossing of one of the incremental signals (SIN, COS) is present.

21. Method according to Claim 15, **characterised in that** the analog incremental signals (SIN, COS) are divided via one or more interpolator units (9, 10) and one or more digital words are formed, which correspond to the associated position values, the digital words are used for addressing a memory module (11), which contains at least one conversion table for at least one signal period variation factor and via which a signal with varied signal period is formed, and on the output side selection signals for one or more D/A converter units (12A, 12B) are generated via the memory module (11), so that analog incremental signals (SIN', COS') with varied signal period (SP') are available at the output of the signal period variation unit.

22. Method according to Claim 15, **characterised in that** in addition resulting errors in the signal period variation are eliminated via correcting elements (25, 27, 38) assigned to the signal period variation unit (6, 26).

23. Method according to Claim 15, **characterised in that** the memory module (41) has several addressed table regions ($21A_1$-$21A_k$, $21B_1$-$21B_k$), to which defined signal amplitude values of the incremental signals (SIN, COS) to be transmitted to the evaluation unit are respectively assigned.

24. Method according to Claim 23, **characterised in that** the pair of phase-shifted incremental signals (SIN. COS) supplied by the position measuring device is respectively fed to an interpolator unit (29) as well as a direction recognition unit (23), to the outputs of which an address counter unit (24) is connected downline and the addressed table regions ($21A_1$-$21A_k$, $21B_1$-$21B_k$) of the at least one conversion table (21A, 21B) are selected in the memory module (41) via the address counter unit (24) on the output side.

25. Method according to Claim 24, **characterised in that** for variation of the signal period (SP') via the address counter unit (24), the at least one conversion table (21 A, 21B) is selected in predetermined selection increments, wherein a specific selection increment is assigned to each signal period variation factor (n).

26. Method according to Claim 24, **characterised in that** the signal amplitude values assigned to the selected table regions ($21A_1$-$21A_k$, $21B_1$-$21B_k$) are transmitted to the D/A converter units (22A, 22B), which generate therefrom the incremental signals (SIN', COS') provided for transmission to the evaluation unit downline.

27. Method according to Claim 22, **characterised in that** for correction of the errors in position determination resulting during measurement

- output signals of the interpolator unit (29) are fed to an input counter unit (25) and used for determination of a current nominal position measured value (NPM),
- the number of cycles performed through the at least one conversion table (21A, 21B) is determined via a cycle counter unit (38),

- a current nominal position measured value (NPM) is constantly determined via a processor unit (27) from the output signals of the input counter unit (25) and compared with a current actual position measured value (APM), which results from a current status of the address counter unit (24) and a current status of the cycle counter unit (38), and in the case of a determined deviation of the nominal and actual position measured value (NPM, APM) the address counter value (ACV) of the address counter unit (24) is specifically varied.

28. Method according to Claim 22, **characterised in that** for correction of the errors in the position measurement resulting during measurement, parameters (p, T, f) with respect to the measurement environment are additionally constantly detected, which are fed to the processor unit (27) and are additionally employed by this to determine the current actual position measured value (APM).

29. Method according to Claim 22, wherein for correction of the errors in the position measurement resulting during measurement, compensation data (CD) specific to the measurement arrangement are additionally fed to the processor unit (27) and are additionally employed by this to determine the current nominal position measured value (NPM).

**Revendications**

1. Dispositif de mesure de position pour déterminer la position relative de deux objets pouvant se déplacer l'un par rapport à l'autre, qui, en cas de déplacement relatif, délivre au moins une paire de signaux incrémentaux (SIN, COS) analogiques déphasés et dans lequel une unité de variation de période de signal (6; 26) permet d'opérer une variation définie des périodes de signal (SP) des signaux incrémentaux (SIN', COS') analogiques transmis à une unité de traitement (4) disposée à la suite, **caractérisé en ce que**

- l'unité de variation de période de signal (6; 26) permet de faire varier d'un coefficient de variation n ≥ 1 les périodes de signal (SP') transmises, et
- l'unité de variation de période de signal (6; 26) comprend un module de mémoire (11; 41), avec au moins une table de conversion (21A, 21B), et que des convertisseurs N/A (12A, 12B; 22A, 22B), branchés en aval, peuvent être activés par l'intermédiaire de la table de conversion (21A, 21B) et produisent les signaux incrémentaux (SIN', COS') analogiques, transmis à l'unité de traitement (4), avec une période de signal (SP') modifiée.

2. Dispositif de mesure de position selon la revendication 1, **caractérisé en ce que** l'unité de variation de période de signal (6; 26) est connectée à une ligne de commande (8) qui permet de transmettre à l'unité de variation de période de signal (6; 26) un signal de commande destiné à faire varier la période de signal (SP) des signaux incrémentaux (SIN, COS) analogiques.

3. Dispositif de mesure de position selon la revendication 1, **caractérisé en ce que** les signaux incrémentaux (SIN, COS) non modifiés, présentant la période de signal (SP) initiale, peuvent également être transmis à l'unité de traitement (4) disposée à la suite.

4. Dispositif de mesure de position selon la revendication 1, **caractérisé en ce que** l'unité de variation de période de signal (6; 26) comprend au moins une première unité d'interpolation (9) qui est branchée en amont du module de mémoire (11; 41).

5. Dispositif de mesure de position selon la revendication 4, **caractérisé en ce que** la première unité d'interpolation (9) sert à réaliser la subdivision à résolution élevée des signaux incrémentaux (SIN, COS) analogiques et qu'une deuxième unité d'interpolation (10) est prévue dans l'unité de variation de période de signal (6; 26) et permet de détecter les passages par zéro des signaux incrémentaux (SIN, COS) analogiques.

6. Dispositif de mesure de position selon la revendication 1, **caractérisé en ce que** l'unité de variation de période de signal (6; 26) comprend en outre des moyens de correction (25, 27, 38) pour éliminer des erreurs résultant de la variation de période de signal.

7. Dispositif de mesuré de position selon la revendication 1, **caractérisé en ce que** la table de conversion (21A, 21B) présente plusieurs zones de table ($21A_1$ - $21A_k$, $21B_1$ - $21B_k$) désignées et susceptibles d'être activées, auxquelles sont associées respectivement des valeurs définies d'amplitude de signal des signaux incrémentaux (SIN', COS') à transmettre à l'unité de traitement.

8. Dispositif de mesure de position selon la revendication 7, **caractérisé en ce que** le module de mémoire (41) comprend au moins une table de conversion (21A, 21B) pour chaque coefficient de variation de période de signal (n) prévu.

9. Dispositif de mesure de position selon la revendication 7, **caractérisé en ce que** l'unité de variation de période de signal (6; 26) comprend, côté entrée, une unité d'interpolation (29) destinée à produire des signaux numériques interpolés, ainsi qu'une unité d'identification de direction (23), qui peuvent recevoir respectivement les signaux incrémentaux (SIN, COS) délivrés par une unité de génération de signaux (5), et qu'en outre, les sorties de l'unité d'interpolation (29) et de l'unité d'identification de direction (23) sont suivies en aval d'une unité de comptage d'adresses (24) qui permet d'activer, côté sortie, les zones de table ($21A_1$ - $21A_k$, $21B_1$ - $21B_k$) désignées de la table de conversion (21A, 21B), au nombre d'au moins une, dans le module de mémoire (41).

10. Dispositif de mesure de position selon la revendication 9, **caractérisé en ce que**, pour faire varier la période de signal (SP'), l'unité de comptage d'adresses (24) active la table de conversion (21A, 21B) avec une longueur de pas de commande associée, en fonction de la période de signal (SP') à délivrer.

11. Dispositif de mesure de position selon la revendication 9, **caractérisé en ce que** l'unité de variation de période de signal (6; 26) comprend en tant que moyens de correction (25, 27, 38) une unité de comptage d'entrées (25), une unité de comptage de passages (38) et une unité à processeur (27), sachant que

- l'unité de comptage d'entrées (25) peut recevoir les signaux de sortie de l'unité d'interpolation (29), signaux qui permettent de déterminer une valeur de mesure de position de consigne (SPM) actuelle,
- l'unité de comptage de passages (38) détermine le nombre de passages effectués dans la table de conversion (21A, 21B), au nombre d'au moins une, et
- l'unité à processeur (27) est agencée de manière telle qu'elle calcule en continu la valeur de mesure de position de consigne actuelle, via les signaux de sortie de l'unité de comptage d'entrées (25), et la compare avec une valeur de mesure de position effective (IPM) actuelle qui résulte d'une position actuelle de l'unité de comptage d'adresses (24) et d'une position actuelle de l'unité de comptage de passages (38) et, en cas d'écart entre les valeurs de mesure de position de consigne et de position effective (SPM, IPM), modifie de manière définie la valeur de compteur d'adresses (AZW) de l'unité de comptage d'adresses (24).

12. Dispositif de mesure de position selon la revendication 11, **caractérisé en ce que** les moyens de correction (25, 27, 38) comprennent en outre des moyens de détection (39) pour déterminer en continu, à l'aide de capteurs, des paramètres (p, T, f) concernant l'environnement de mesure, et que lesdits paramètres (p, T, f) peuvent être transmis à l'unité à processeur (27) qui les utilise en plus pour déterminer la valeur de mesure de position effective (IPM) actuelle.

13. Dispositif de mesure de position selon la revendication 11, **caractérisé en ce que** les moyens de correction (25, 27, 38) comprennent en outre une mémoire de données (40) dans laquelle sont enregistrées des données de compensation (KD) spécifiques à l'agencement de mesure, pouvant être transmises à l'unité à processeur (27) qui utilise ces données de compensation (KD) en plus pour déterminer la valeur de mesure de position de consigne (SPM) actuelle.

14. Dispositif de mesure de position selon la revendication 11, **caractérisé en ce que** les moyens de correction (25, 27, 38) comprennent en outre une unité de détermination d'indice de réfraction, dont les signaux de sortie peuvent être transmis à l'unité à processeur qui les utilise en plus pour déterminer la valeur de mesure de position de consigne actuelle.

15. Procédé d'utilisation d'un dispositif de mesure de position pour déterminer la position relative de deux objets pouvant se déplacer l'un par rapport à l'autre, qui, en cas de déplacement relatif, délivre au moins une paire de signaux incrémentaux (SIN, COS) analogiques déphasés et dans lequel une unité de variation de période de signal (6; 26) permet d'opérer une variation définie, au moins d'un coefficient n de variation de période de signal, des périodes de signal (SP') des signaux incrémentaux (SIN', COS') analogiques transmis à une unité de traitement (4) disposée à la suite, **caractérisé en ce que**

    - l'unité de variation de période de signal (6; 26) fait varier les périodes de signal (SP') d'un coefficient de variation de période de signal $n \geq 1$, et
    - pour effectuer la variation de période de signal, l'unité de variation de période de signal (6; 26) comprend un module de mémoire (11; 41) avec au moins une table de conversion (21A, 21B), et que des convertisseurs N/A (12A, 12B; 22A, 22B) sont activés par l'intermédiaire de la table de conversion (21A, 21B) et produisent les signaux incrémentaux (SIN', COS') analogiques transmis à l'unité de traitement (4), avec une période de signal (SP') modifiée.

16. Procédé selon la revendication 15, **caractérisé en ce que** les périodes de signal (SP, SP') différentes, au nombre d'au moins deux, se situent dans un rapport réciproque à nombres entiers.

17. Procédé selon la revendication 15, **caractérisé en ce que** les périodes de signal (SP, SP') sont modifiées en fonction de la vitesse relative des deux objets pouvant se déplacer l'un par rapport à l'autre.

18. Procédé selon la revendication 17, **caractérisé en ce que**, en cas de vitesses relatives élevées, on règle une période de signal (SP') plus grande, par l'intermédiaire de l'unité de variation de période de signal (6), qu'en cas de vitesses relatives faibles.

19. Procédé selon la revendication 15, **caractérisé en ce que**, pour faire varier la période de signal (SP), un signal de commande, destiné à opérer une commutation définie de la période de signal (SP) actuelle à une autre période de signal (SP'), est transmis par l'unité de traitement (4) à l'unité de variation de période de signal (6) via une ligne de commande (8) entre l'unité de variation de période de signal (6; 26) et une unité de traitement (4) branchée à la suite.

20. Procédé selon la revendication 15, **caractérisé en ce que** la variation de la période de signal (SP) des signaux incrémentaux (SIN, COS) analogiques est réalisée à un instant de commutation ($t_U$) défini, auquel se produit un passage par zéro de l'un des signaux incrémentaux (SIN, COS).

21. Procédé selon la revendication 15, **caractérisé en ce que** les signaux incrémentaux (SIN, COS) analogiques sont subdivisés par une ou plusieurs unités d'interpolation, et un ou plusieurs mots numériques sont formés qui correspondent aux valeurs de position associées, que ces mots numériques sont utilisés pour l'adressage d'un module de mémoire (11) qui contient au moins une table de conversion pour au moins un coefficient de variation de période de signal et par l'intermédiaire duquel on forme un signal à période de signal modifiée et que, côté sortie, le module de mémoire (11) produit des signaux de commande pour une ou plusieurs unités de convertisseur N/A (12A, 12B), de sorte que des signaux incrémentaux (SIN', COS') analogiques à période de signal (SP') modifiée sont disponibles à la sortie de l'unité de variation de période de signal.

22. Procédé selon la revendication 15, **caractérisé en ce que** des moyens de correction (25, 27, 38) associés à l'unité de variation de période de signal (6; 26) permettent en outre d'éliminer les erreurs résultant de la variation de période de signal.

23. Procédé selon la revendication 15, **caractérisé en ce que** le module de mémoire (41) présente plusieurs zones de table ($21A_1$ - $21A_k$, $21B_1$ - $21B_k$)

désignées, auxquelles sont associées respectivement des valeurs définies d'amplitude de signal des signaux incrémentaux (SIN', COS') à transmettre à l'unité de traitement.

24. Procédé selon la revendication 23, **caractérisé en ce que** la paire de signaux incrémentaux (SIN, COS) déphasés, délivrés par le dispositif de mesure de position, est transmise respectivement à une unité d'interpolation (29) ainsi qu'à une unité d'identification de direction (23), dont les sorties sont suivies en aval d'une unité de comptage d'adresses (24), et que les zones de table ($21A_1$ - $21A_k$, $21B_1$ - $21B_k$) désignées de la table de conversion (21A, 21B), au nombre d'au moins une, dans le module de mémoire (41), sont activées par la sortie de l'unité de comptage d'adresses (24).

25. Procédé selon la revendication 24, **caractérisé en ce que**, pour faire varier la période de signal (SP'), l'unité de comptage d'adresses (24) active la table de conversion (21A, 21B), au nombre d'au moins une, avec des longueurs de pas de commande prédéterminées, une longueur de pas de commande précise étant associée à chaque coefficient (n) de variation de période de signal.

26. Procédé selon la revendication 24, **caractérisé en ce que** les valeurs d'amplitude de signal associées aux zones de table ($21A_1$ - $21A_k$, $21B_1$ - $21B_k$) ac-tivées sont transmises aux unités de convertisseur N/A (22A, 22B) qui les utilisent pour produire les signaux incrémentaux (SIN', COS') destinés à être transmis à l'unité de traitement placée en aval.

27. Procédé selon la revendication 22, **caractérisé en ce que**, pour corriger les erreurs de la détermination de position qui résultent de la mesure,

   - des signaux de sortie de l'unité d'interpolation (29) sont transmis à une unité de comptage d'entrées (25) et sont utilisés pour déterminer une valeur de mesure de position de consigne (SPM) actuelle,
   - le nombre de passages effectués dans la table de conversion (21A, 21B), au nombre d'au moins une, est déterminé à l'aide d'une unité de comptage de passages (38),
   - une unité à processeur (27) calcule en continu une valeur de mesure de position de consigne (SPM) actuelle à partir des signaux de sortie de l'unité de comptage d'entrées (25) et la compare avec une valeur de mesure de position effective (IPM) actuelle qui résulte d'une position actuelle de l'unité de comptage d'adresses (24) et d'une position actuelle de l'unité de comptage de passages (38) et, en cas d'écart constaté entre les valeurs de mesure de position de consigne et de position effective (SPM, IPM), modifie de manière définie la valeur de compteur d'adresses (AZW) de l'unité de comptage d'adresses (24).

28. Procédé selon la revendication 22, **caractérisé en ce que**, pour corriger les erreurs de détermination de position qui résultent de la mesure, on détecte en plus en continu des paramètres (p, T, f) concernant l'environnement de mesure qui sont transmis à l'unité à processeur (27) qui les utilise en plus pour déterminer la valeur de mesure de position effective (IPM) actuelle.

29. Procédé selon la revendication 22, **caractérisé en ce que**, pour corriger les erreurs de détermination de position qui résultent de la mesure, on transmet en outre des données de compensation (KD), spécifiques à l'agencement de mesure, à l'unité à processeur (27) qui les utilise en plus pour déterminer la valeur de mesure de position de consigne (SPM) actuelle.

FIG. 1

FIG. 2

FIG. 3

FIG. 4

EP 0 872 714 B1